# EUROPEAN PATENT SPECIFICATION

(11) **EP 0 978 840 B1**
(45) Date of publication and mention of the grant of the patent: **26.06.2002**
(21) Application number: 99306193.6
(22) Date of filing: 04.08.1999
(51) Int. Cl.: G11B 20/00

(54) **Method and system for controlling copy generations of digital data**
Verfahren und System zum Kontrollieren von Kopiegenerationen von digitalen Daten
Procédé et système pour contrôler la génération de copie de données numériques

(30) Priority: 05.08.1998 JP 22180498
(43) Date of publication of application: 09.02.2000
(73) Proprietor: KABUSHIKI KAISHA TOSHIBA, Kawasaki-shi, Kanagawa-ken 210-8572 (JP)
(72) Inventor: Katoh, Taku, 1-1-1 Shibaura, Minato-ku, Tokyo (JP)
(74) Representative: March, Gary Clifford

(56) References cited:
- WO-A-97/13248
- US-A- 5 719 937
- US-A- 5 737 306
- B. SCHNEIER: "Applied cryptography, second edition" 1996 , JOHN WILEY AND SONS , NEW YORK XP002121988 * page 71, paragraph 3.7 *

## Description

### FIELD OF THE INVENTION

The present invention relates to methods and systems for controlling copy generations of digital data stored in recording media to protect the data from unauthorized copying.

The present invention, more particularly, relates to a method and system, such as record media production equipment, data playback equipment, and data recording equipment, which recognizes the copy generations using a plurality of partial identification information embedded in the data, and in which the partial identification information is changed whenever the data is copied.

### BACKGROUND OF THE INVENTION

Audio-visual information such as sound and image, as well as computer program and other data, has recently been distributed in the form of digital data (also referred to as 'multimedia data') stored in recording media. Different from analog data, however, the quality of digital data is not deteriorated through copying. Consequently, there is a possibility that an unauthorized copy (also referred to as a 'pirated edition') having the same quality as the original may be manufactured and circulated. Therefore, a technology which protects digital data from unauthorized copying is necessary.

To give an example relating to audio data, a copy generation management system (CGMS) and a serial copy management system (SCMS) each provide simple protection technologies to protect against unauthorized copying. In both systems, information indicating whether copying of the recording medium is permitted or not is stored in the recording medium in the form of flag data of two bits. Only recording the data copied from an originally recorded version of the recording medium such as a compact disc (CD) onto another recording medium such as a digital audio tape (DAT) or a mini disc (MD) (generally called a 'first generation copy') is permitted. However, it is comparatively easy to falsify the flag data during transmission of the data for recording.

### SUMMARY OF THE INVENTION

Accordingly, it is an object of the present invention to provide an improved protection technology.

A method of controlling copy generations of digital data comprises following steps. The data is stored in a first recording medium with a plurality of identification information. The data is copied from the first recording medium. A predetermined number of the plurality of identification information are changed to partially change the plurality of identification information. The copied data is stored on a second recording medium with the partially changed plurality of identification information. Permissibility of using the copied data stored in the second medium is judged from a number of the unchanged identification information stored with the copied data.

A recording medium comprises following two areas. A first area stores digital data in which a plurality of identification information is embedded. A second area stores control information which includes information about the embedded locations in the data.

Data playback equipment which replays digital data stored in a recording medium, a plurality of identification information embedded in the digital data in mutually different locations, and information on the locations of the identification data also being stored in the recording medium, comprises reading means, extracting means, and judging means. The reading means reads the digital data and the plurality of identification information from the recording medium. The extracting means extracts the embedded plurality of identification information from the digital data using the location information. The judging means judges the permissibility of replaying the digital data from a number of justifiable identification information.

Data recording equipment which records digital data inputted with a plurality of identification information in a recording medium, comprises judging means and embedding means. The judging means judges the permissibility of recording the digital data from the number of justifiable identification information. The embedding means embeds the plurality of identification information on mutually different locations in the digital data.

### BRIEF DESCRIPTION OF THE DRAWINGS

A more complete appreciation of the present invention and many of the attendant advantages thereof will be readily obtained as the same becomes better understood by reference to the following detailed description, when considered in connection with the accompanying drawings, wherein;
FIG.1 is a block diagram showing an example of a main configuration of recording media production equipment consistent with the present invention;
FIG.2 is a block diagram showing an example of a main configuration of data playback equipment and data recording equipment consistent with the present invention;
FIG.3 shows an example of the format of a recording medium consistent with the present invention;
FIG.4 shows an example of a process for recognizing copy generations with six pieces of PID data according to a (2,6) secret sharing scheme;
FIG.5 is a block diagram showing another example of a main configuration of recording media production equipment consistent with the present invention; and
FIG.6 is a block diagram showing another example of a main configuration of data playback equipment and data recording equipment consistent with the present invention.

### DETAILED DESCRIPTION OF THE INVENTION

Embodiments consistent with the present invention are configured in accordance with a technology which does not merely judge whether a playback recording medium as an original or a copy but also recognizes the copy generation of the recording medium to control the copy generations.

### First embodiment

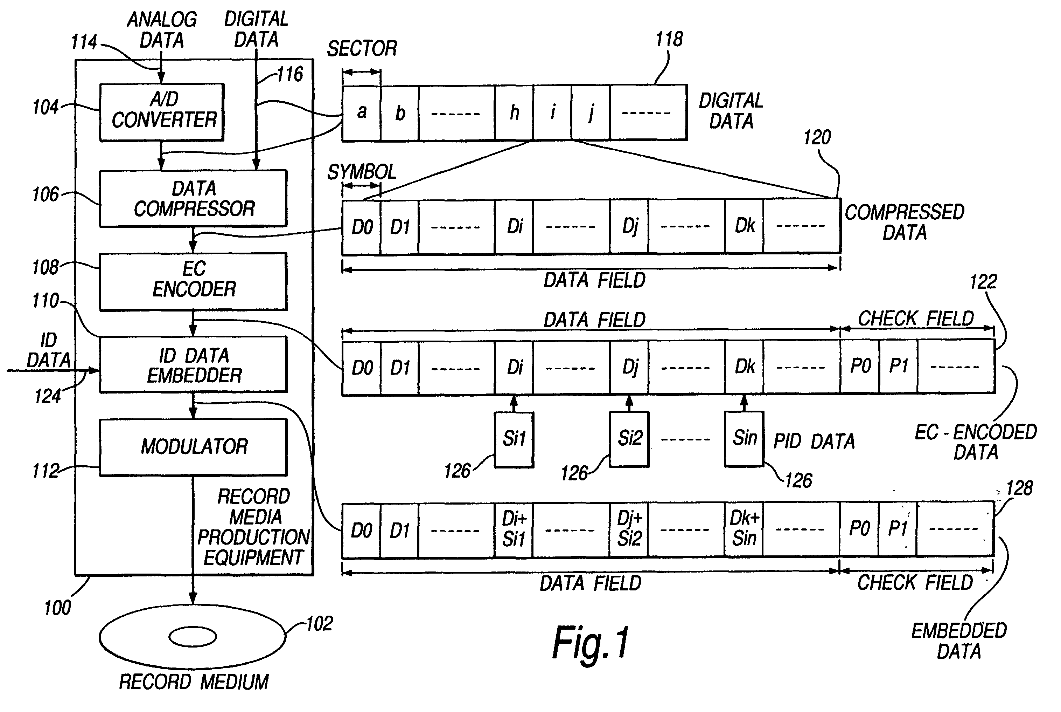

FIG.1 is a block diagram showing an example of a main configuration of recording media production equipment 100 according to a first embodiment of the present invention. Recording media production equipment 100 records digital data onto recording media which are replayed by data playback equipment described below.

A record medium 102 is a readable or readable/recordable disc such as a DVD-ROM or a DVD-RAM, respectively. In contrast, more fully described below, a recording medium on which recording equipment records digital data copied from another record medium is a readable/recordable disc such as a DVD-RAM, i.e., not a DVD-ROM.

The record media production equipment 100 includes an analog to digital (A/D) converter 104, a data compressor 106, an error correction (EC) encoder 108, an identification (ID) data embedder 110, and a modulator 112. Equipment 100 also includes peripheral circuits (not shown in FIG.1) needed for manufacturing DVD-ROMs to store contents data or to store contents data in DVD-RAMs, etc. As usual herein, contents data includes, for example, audio or audio-visual data or computer programs.

The process for recording onto the recording medium 102 in the recording the media production equipment 100 is as follows.

The equipment 100 can receive contents data as both analog data 114 and digital data 116 for recording onto recording medium 102. In case of the contents data being analog data, the A/D converter 104 first digitizes the analog data 114. The digital data output by the A/D converter 104 as well as digital data can be represented as digital data 118 consisting of secters a, b, ... h, i, j, ... etc. The data compressor 106 compresses this digitized data, as well as the digital data 116, into compressed data 120. The compressed data 120 consists of a plurality of specific unit bytes hereinafter referred to as "symbols", e.g., symbols D₀, D₁, .... The EC encoder 108 performs an appropriate encoding (hereinafter referred as an "EC-encode") of the compressed data to provide EC-encoded data 122. This encoding is performed to correct errors which may occur during transmission for playback.

The ID data embedder 110 embeds an ID data 124 in the EC-encoded data 122 in the form of a plurality of partial ID data 126 hereinafter referred to as "PID data", e.g., Sᵢ₁, Sᵢ₂, ..., Sᵢₙ. The PID data 126 are mutually different and generated from the ID data 124 according to a (k,n) secret sharing scheme, etc. see e.g. B. Schneier, Applied Cryptography, 2^{nd} edition 1996, John Wiley and Sons, New York, page 71. An example of a suitable secret sharing scheme is disclosed in "Ango-riron nyumon" (by Eiji Okamoto). The ID data embedder 110 includes a circuit which generates the plurality of PID data from the ID data 124 according to the (k,n) secret sharing scheme and a circuit which EC-encodes the PID data 126 and embeds the EC-encoded PID data in the EC-encoded contents data 122 to provide embedded data 128.

In the case of n pieces of information {y₁, y₂, ..., yₙ} being generated from secret information according to the (k,n) secret sharing scheme, k or more pieces randomly chosen among the n pieces can regenerate the secret information, but less than k pieces can't. Accordingly, if some of the n pieces of information are changed, the secret information can't be regenerated except when the number of pieces changed is n-k or less and at the same time none of the changed pieces is included among the k pieces. This feature of the (k,n) secret sharing scheme is practiced in this embodiment.

The EC-encoded plurality of PID data is respectively superimposed on different symbols of EC encoded data 122 in conformity with an exclusive OR operation by the ID data embedder 110. Every EC-encoded PID data is naturally superimposed as an error on the symbols because this operation is performed after the EC-encoding of the contents data. Consequently, if every PID data should not be extracted from the embedded data 128 before the EC-decoding of the contents data described later, these PID data will be lost.

The embedded data is modulated by the modulator 112 and stored on the record medium 102. In FIG.1, the i-th, j-th, ... k-th symbols of the data field of the embedded data 128 are respectively superimposed with the PID data Sᵢ₁, Sᵢ₂, ... Sᵢₙ.

Although there are various methods of choosing the superimposed symbols, the symbols are chosen on the basis of original location information stored in advance in the recording medium 102 in this embodiment. The superimposed symbols may be located in the check field as well as in the data field. It is necessary to decide the length of the PID data 126 within the limits that the PID data 126 can be extracted in consideration of the ability of the adopted error correcting code.

Next, data playback equipment which replays the record media 102 recorded as described above and data recording equipment which records the repl.ayed data onto another recording media are explained.

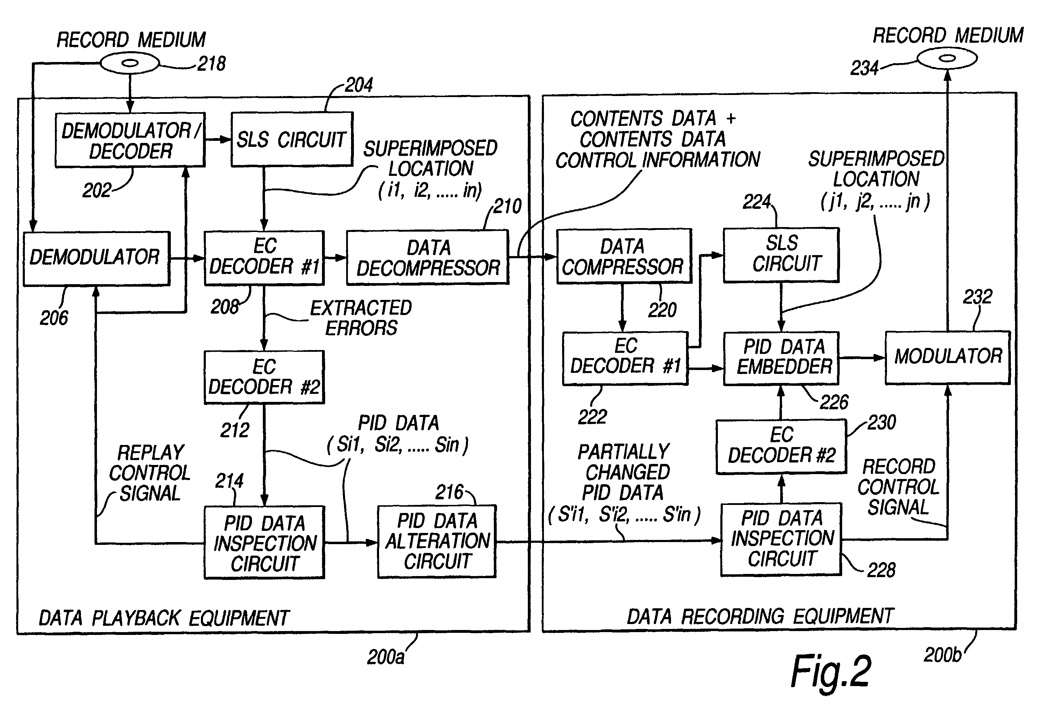

FIG.2 is a block diagram showing an example of a configuration of data playback equipment 200a and data recording equipment 200b consistent with the present invention. Data playback equipment 200a and data recording equipment 200b respectively perform a replay and a recording at least with a digital video disc / digital versatile disc (DVD). An encryption technology for protecting the contents data from unauthorized copy has already been introduced in the DVD. The explanation of existing protection technologies is omitted in this embodiment because equipment consistent with embodiments of the present invention can be used independently of those technologies. It is naturally able to apply those technologies to this embodiment.

Although the data playback equipment 200a and the data recording equipment 200b are separately explained in this embodiment, it is desirable that both of them are constructed to cooperate as playback/recording equipment.

The data playback equipment 200a includes a demodulator/EC decoder 202, a superimposed location specification (SLS) circuit 204, a demodulator 206, an error correction (EC) decoder #1 208, a data decompressor 210, an EC decoder #2 212, a PID data inspection circuit 214, and a PID data alteration circuit 216.

The demodulator/EC decoder 202 reads original location information, which is a source of the locations of superimposed symbols, from a recorded medium 218. The recorded medium 218, such as a DVD, may be the recorded medium 102 shown in FIG.1. an authorized copy of the recorded medium 102, or an unauthorized one. The demodulator/EC decoder 202 demodulates and EC-decodes the original location information.

The *SLS* circuit 204 calculates the superimposed locations (i₁, i₂, ..., iₙ) of the PID data 126 in a manner described below using the original location information and inputs the calculated locations to the EC decoder #1 208.

The demodulator 206 reads the contents data and its control information from the record medium 218. The demodulator 206 demodulates both of them and inputs the demodulated data to the EC decoder #1 208.

The EC decoder #1 208 extracts errors, e.g., PID data and, possibly, actual errors which occurred during the transmission, located on the superimposed symbols and inputs the extracted errors to the EC decoder #2 212. The EC decoder #1 208 also EC-decodes the contents data and its control information to correct the PID data as errors as well as actual errors and inputs the EC-decoded data to the data decompressor 210.

The data decompressor 210 decompresses the data and outputs the decompressed data. When the decompressed data is visual data, the contents is outputted to a display, and when it is audio data, the contents is outputted to a speaker (not shown in FIG.2).

The EC decoder #2 212 calculates the PID data (Sᵢ₁, Sᵢ₂, ..., Sᵢₙ) by EC-decoding the extracted errors.

The PID data inspection circuit 214 inspects the calculated PID data. That is, in case the ID data 124 is generated according to the (k,n) secret sharing scheme, first, the ID data inspection circuit 214 checks for the mutual differences among all of the PID data.

If every PID data is mutually different, next, the ID data inspection circuit 214 checks the sameness of every data regenerated with k pieces of every ₙCₖ combination. In the case that all regenerated data is the same(namely, the ID data 124), the record medium which includes the PID data is judged as an original. Except the above case, the recording medium is judged as a copy. Further, in the case of a copy, the copy generation of the recording medium is judged in a manner described below on the basis of the number of combinations which regenerates the ID data.

If the ID data can not be regenerated with the extracted PID data or the judged copy generation does not meet predetermined requirements regarding acceptability, the PID data inspection circuit 214 outputs a replay control signal to both the demodulator/EC decoder 202 and the demodulator 206 to stop the reading.

If the recording medium 218 is justified by the PID data inspection circuit 214, the PID data alteration circuit 216 randomly chooses a predetermined number of the PID data among all of the PID data. The PID data alteration circuit 216 changes the chosen PID data into different data such as random data and outputs the partly changed PID data S' = (Sᵢ₁', Sᵢ₂', ..., Sᵢₙ') to the data recording equipment 200b. All of the new data needs to be mutually different and different from the existing PID data to be used for controlling the copy generations.

If copied data is merely stored on a recording medium, the contents data can't be replayed by the data playback equipment 200a. That is, it is necessary to embed specific ID data in the data to be stored on the recording medium. Consequently, the data playback equipment 200a sends the partly changed PID data to the recording equipment 200b.

The data recording equipment 200b has a data compressor 220, an EC encoder #1 222, an SLS circuit 224, a PID data embedder 226, a PID data inspection circuit 228, an EC encoder #2 230, and a modulator 232.

The data compressor 220 compresses the data received from the data decompressor 210.

The EC encoder #1 222 EC-encodes the compressed data.

The SLS circuit 224 suitably generates new original location information and new coordinates which is decided in a manner described below. The SLS circuit 224 calculates new superimposed locations (j₁, j₂, ..., jₙ) by formulating the new original location information using a specific function such as a hash function and inputs the calculated superimposed locations to the PID embedder 226.

The PID data inspection circuit 228 inspects the partly changed plurality of PID data received from the PID data alteration circuit 216 in the same way as the PID data inspection circuit 214 does.

If the replayed data is judged from the received PID data to be a copy whose generation is over a predetermined standard generation, the PID data inspection circuit 228 outputs a record control signal to the modulator 232 to stop the recording. If the PID data meet the necessary conditions for copying, the PID data is EC-encoded by the EC encoder #2 230 and sent to the PID data embedder 226.

The PID data embedder 226 superimposes the PID data received from the EC-encoder #2 230 on the locations specified by the SLS circuit 224.

The modulator 232 modulates the superimposed data and records the data on a record medium 234.

To protect both equipment from a hardware tampering, it is desirable that the PID data inspection circuit 214 and the PID data alteration circuit 216 should be produced as one circuit, and also the PID data embedder 226 and the PID data inspection circuit 228 should be produced as one circuit.

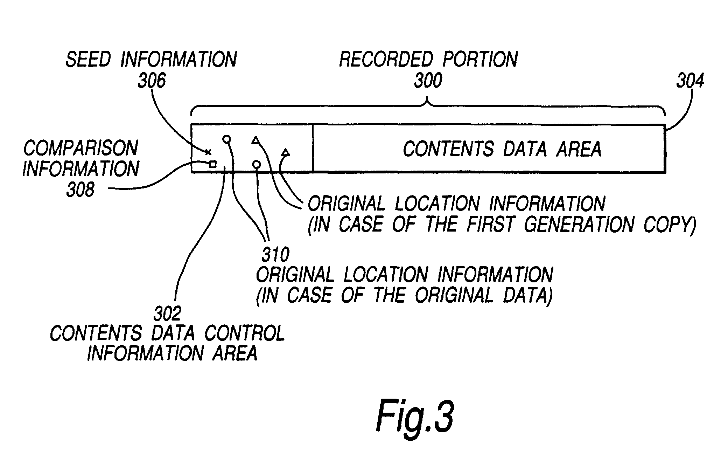

FIG.3 shows an example of the format of a recording medium with data recorded therein in a manner consistent with the present invention.

As shown in FIG.3, a recorded portion 300 of recording medium such as the recording media 102, 218, and 234 has a contents data control information area 302 and a contents data area 304. The contents data control information area includes unchangeable seed information 306 and changeable comparison information 308, both of which are stored on predetermined locations and used for calculating coordinates of the original location information 310 which is also stored in the contents data control information area 302.

In the data playback equipment 200a, the SLS circuit 204 has a number of comparison functions, and coordinates extraction functions which respectively correspond to the comparison functions. The SLS circuit 204 transforms the seed information 306 using the comparison functions. If a result agrees with the current comparison information 308, the SLS circuit 204 calculates the coordinates of the original location information 310 by transforming the seed information using the coordinates extraction function which corresponds to the comparison function.

On the other hand, in the recording equipment 200b, the SLS circuit 224 has the same functions as the SLS circuit 204. These functions are used to change the coordinates of the original location information 310 to prevent the contents data from unauthorized copying. The SLS circuit 224 randomly chooses a coordinates extraction function, calculates coordinates by transforming the seed information 306 using the coordinates extraction function, and stores new original location information 312 on the calculated coordinates. Thus, the new original location information 312 corresponds to a first generation copy. Furthermore, the SLS circuit 224 calculates new comparison information by transforming the seed information 306 using the comparison function according to the chosen coordinates extraction function and stores the new comparison information on the new location in the contents data control information area.

The specifying method of the superimposed location from the original location information has only to be unified between the data playback equipment 200a and the data recording equipment 200b. For example, the result of the transformation of the original location information using the hash function may be considered a superimposed location.

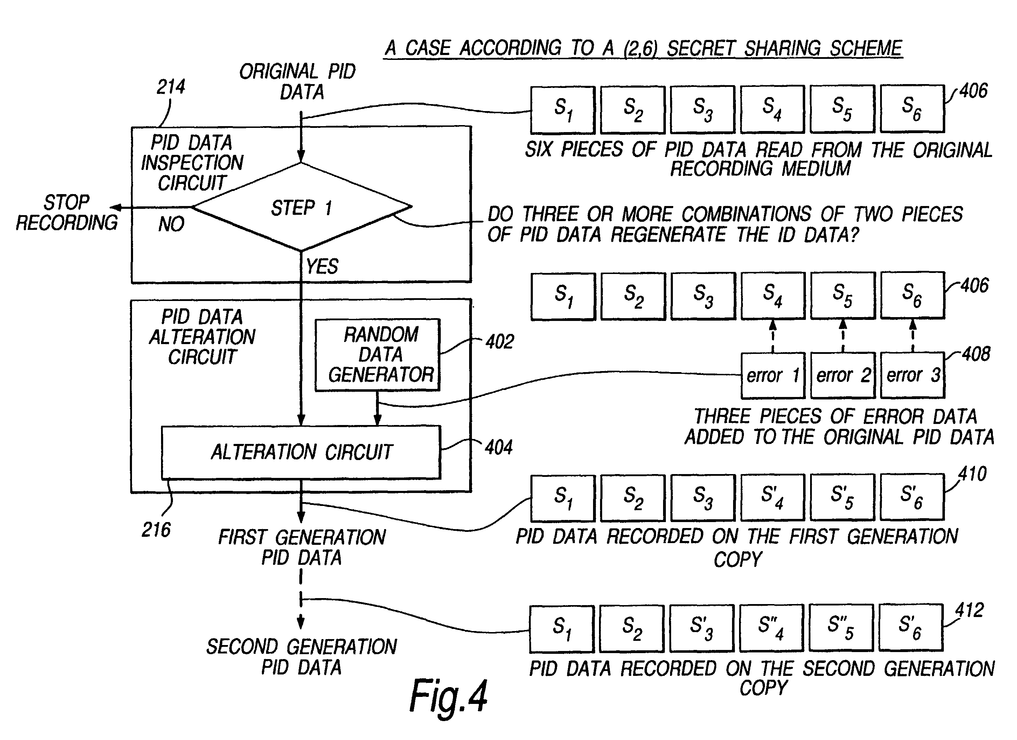

FIG.4 shows an example of a process for recognizing copy generations with six pieces of PID data according to a (2,6) secret sharing scheme. The process is performed by the PID data inspection circuit 214, the PID data alteration circuit 216 which includes a random data generator 402 and an alteration circuit 404. The random data generator 402 generates a predetermined number of random data. The alteration circuit 404 randomly chooses the same predetermined randomly generated number of pieces of PID data and adds the random data to the chosen PID data.

Using the (2,6) secret sharing scheme in this example, ₆C₂ provides there are 15 possible combinations of two pieces of PID data. Every randomly chosen two pieces of PID data stored in the original recording medium, hereinafter referred to as an original PID data 406, e.g., PID data S₁, S₂, ..., S₆ can regenerate the same data, namely, the ID data according to the (2,6) secret sharing scheme. In other words, the original recording medium includes fifteen justifiable combinations of two pieces of PID data and six pieces of justifiable PID data.

In this embodiment, every replaying or recording except for (1) replaying the original, (2)recording the original on another record medium, and (3)replaying the first generation copy, is treated as an unauthorized use. In the present example, three pieces of original PID data are randomly chosen by the alteration circuit 404, e.g., S₄, S₅, S₆, and added with three pieces of random data as error data 408 generated by the random data generator 402, e.g., errorl, error2, error3, whenever the data recorded on an original recording medium is copied.

Accordingly, on the occasion of recording the replayed data, the PID inspection circuit 214 investigates how many combinations of two pieces of the PID data regenerate the ID data at step 1. In case three or more combinations regenerate the ID data, the recording is permitted to proceed. In case just three combinations, e.g., S₁&S₂, S₂&S₃, S₃&S₁, regenerate the ID data, the recording medium storing the played data is identified as the first generation copy. In case less than three pieces of the PID data regenerate the ID data, the recording medium storing the replaying data is identified as a second generation copy or later and the recording is stopped. The PID data inspection circuit 228 basically performs the same investigation as step 1.

In case the recording is permitted to proceed, the PID data alteration circuit 216 changes the randomly chosen three pieces of the original PID data, e.g., S₄, S₅, S₆, to mutually different random data by replacing or by superimposing random data on the chosen original PID data to provide the first generation PID data 410, e.g., S₁, S₂, S₃, S'₄, S'₅, S'₆. Every chosen PID data is shown with a prime mark in FIG.4. The recording is stopped except when the recording is regarded as the original copying. In case the recording is permissible, the PID data embedder 226 superimposes the first generation PID data on the contents data and the superimposed contents data is recorded on the second recording medium. Copying of the first or later generation copy is continuously prohibited in the same manner.

With further reference to Fig.4. in case copying of the first generation copy is permitted, the PID inspection circuit 214 performs the same investigation of the first generation PID data. The PID data alteration circuit 216 changes the randomly chosen three pieces of the first generation PID data, e.g., S₃, S'₄, S'₅, to mutually different random data by replacing or by superimposing random data on the chosen first generation PID data to provide the second generation PID data 412, e.g., S₁, S₂, S'₃, S"₄, S"₅, S'₆. (Only one combination, e.g., S₁&S₂, regenerates the ID data.) And the six pieces of second generation PID data are recorded on the third recording medium in the same manner.

In this embodiment, the case according to the (2,6) secret sharing scheme, which is comparatively simple, is adopted for convenience. Consequently, there is comparatively high probability that a second generation copy can be made. Moreover, the number of generations which can be controlled is comparatively few.

When a higher-level (k,n) secret sharing scheme is practiced on actual equipment, each equipment can control more than two copy generations. Although copy generations are judged based on the number of combinations of PID data in this embodiment, judging based just on the number of permissible PID data can also be practiced.

### Second embodiment

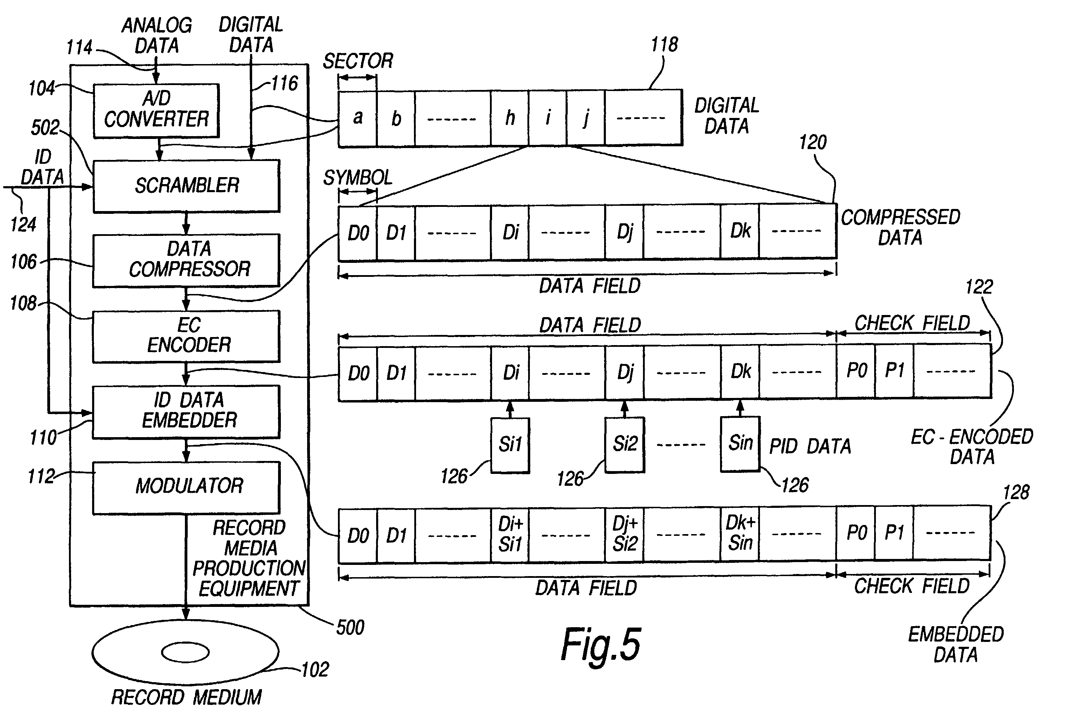

FIG.5 is a block diagram showing an example of a main configuration of a record media production equipment 500 according to a second embodiment of the present invention. In FIG.5, elements that are the same as explained in FIG.1 regarding equipment 100 are identified by the same reference numerals and explanation thereof is omitted. Hereinafter, only new elements are explained.

In this embodiment, record media production equipment 500 provides a scrambler 502 which is located in the upper process of the data compressor 106 adding to the elements of the record medium production equipment 100 of FIG.1. The scrambler 502 scrambles the digital data using the ID data 124 as key information.

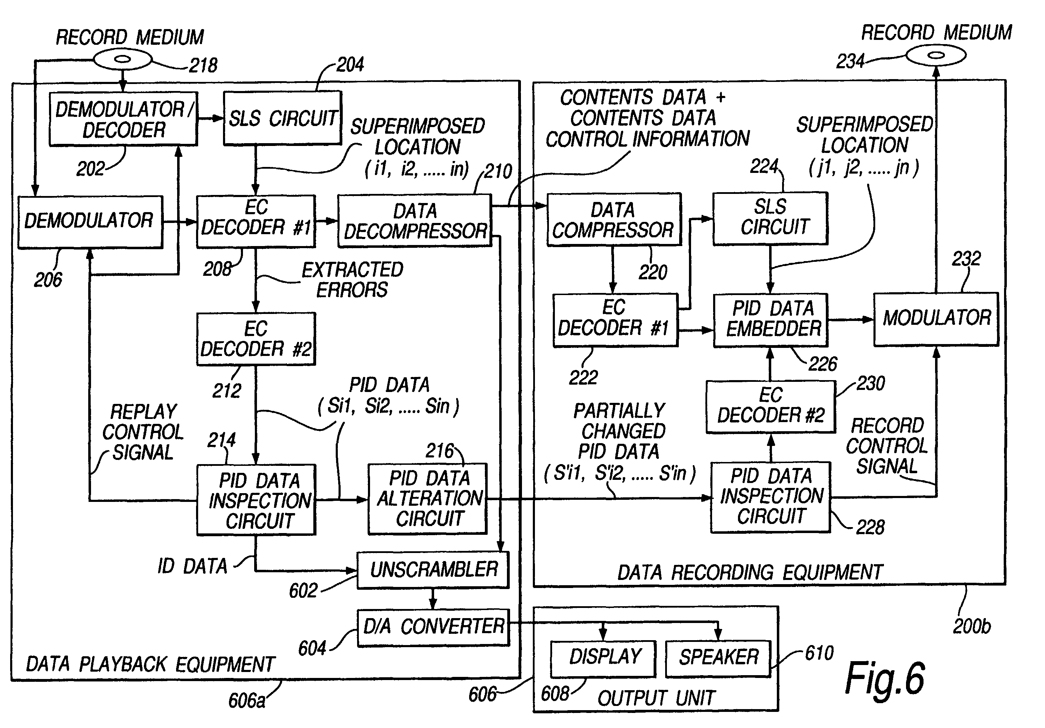

FIG.6 is a block diagram showing an example of a main configuration of data playback equipment 600a and data recording equipment 200b according to the present invention. In FIG.6, elements that are the same as explained regarding equipment 200a and 200b in FIG.2 are identified by the same reference numerals and explanation thereof is omitted. Hereinafter, only new elements are explained.

Data playback equipment 600a includes an unscrambler 602, a D/A converter 604, an output unit 606, including a display 608 and a speaker 610, adding to the elements of the data playback equipment 200a of FIG.2.

In case the data playback equipment 600a outputs the decompressed data to the recording equipment 200b for copying, the data is sent in the same way as described for FIG.2.

In case the data playback equipment 400a outputs the decompressed data to the output unit 606 for replaying, the data decompressor 210 sends the expanded data to the unscrambler 602. The unscrambler 602 unscrambles the expanded data using the ID data (namely, the key information) regenerated by the PID data inspection circuit 214, and then sends the unscrambled data to the D/A converter 604. The D/A converter 604 performs D/A conversion on the unscrambled data and outputs the converted data to the output unit 606.

In this embodiment, although a scramble technology is practiced, another coding technology using the key information may be replaced for it.

Additional advantages and modifications will readily occur to those skilled in the art. Therefore, the present invention in its broader aspects is not limited to the specific details and representative embodiments shown and described herein. Accordingly, various modifications may be made without departing from the scope of the general inventive concept as defined by the appended claims.

## Claims

1. A method of controlling copy generations of digital data, comprising:
generating a plurality of partial identification data ("PID") items from a piece of secret information, a predetermined minimum number of these items being required to regenerate the secret information;
storing the data in a first recording medium together with the plurality of PID items;
copying the data from the first recording medium;
changing a predetermined number of the PID items;
storing the copied data in a second recording medium together with the partially changed identification data; and
determining whether or not the partially changed identification data can be used to regenerate the secret information, so as to determine the permissibility of using the copied data.

2. A method according to claim 1, wherein the determination includes:
identifying the copy generation of the copied data based on the number of unchanged identification data items; and
judging whether the use of the copied data of the identified generation is permitted or not by comparison with a predetermined standard generation number.

3. A method according to claim 2, wherein the determination includes:
counting how many combinations of the predetermined number of unchanged identification data items are capable of regenerating the secret information;
identifying the copy generation of the copied data based on the counted number of combinations; and
judging whether the use of the copied data of the identified generation is permitted or not by comparison with a predetermined standard generation number.

4. A method according to claim 1, wherein the data storing step includes:
superimposing the plurality of PID items at mutually different locations in the data, and
storing information specifying the superimposed locations with the data in the first recording medium; the method further including the steps of:
extracting before the copying, the superimposed plurality of identification data items from the data using the information specifying the superimposed locations;
superimposing the partially changed identification data items at mutually different locations in the copied data; and
storing information specifying the superimposed locations together with the copied data in the second recording medium.

5. A method according to claim 4, further comprising:
error correction encoding the data before storing the data; and
error correction decoding the data after extracting the data.

6. Data playback apparatus which is arranged to replay digital data stored in a recording medium, the data including a plurality of partial identification data ("PID") items which are generated from a piece of secret information and a predetermined minimum number of which are required for regenerating the secret information, the items being embedded in the digital data at mutually different locations, and information specifying the locations of the items also being stored in the recording medium, the apparatus comprising:
means for reading the digital data and the plurality of PID items from the recording medium;
means for extracting the plurality of PID items from the digital data using the location information; and
means for determining the permissibility of replaying the digital data depending on whether or not the embedded plurality of PID items can regenerate the secret information.

7. Data playback apparatus according to claim 6 wherein:
the determining means identifies a copy generation of the digital data based on the number of unchanged PID items and judges whether the replaying of the digital data of the identified generation is permitted or not by comparison with a predetermined standard generation number.

8. Data playback apparatus according to claim 7, wherein:
the judging means is adapted to count how many combinations of the predetermined number of PID items can regenerate the secret information, identifies the copy generation of the digital data on the basis of the counted number of the combinations, and judges whether the replay of the digital data of the identified generation is permitted or not by comparison with a predetermined standard generation number.

9. Data playback apparatus according to claim 8, wherein:
the digital data is error correction encoded before the PID items are embedded in it, and further comprising:
means for error correction decoding the digital data for replaying the digital data after the PID items have been extracted.

10. Data playback apparatus according to claim 6, further comprising:
means for changing a predetermined number of the PID items for recording.

11. Data recording apparatus arranged to record digital data which is input together with a plurality of partial identification data ("PID") items onto a recording medium, the PID items being generated from a piece of secret information and a predetermined minimum number of the items being required to regenerate the secret information, comprising:
means for determining the permissibility of recording the digital data based on whether or not the input PID items can regenerate the secret information; and
means for recording the input digital data together with the input PID items in the recording medium when the determining means judges the recording to be permissible.

12. Data apparatus according to claim 11, wherein:
the recording means embeds the plurality of PID items at mutually different locations in the input digital data and also records information specifying the locations of the PID items.

13. Data recording equipment apparatus according to claim 11, wherein:
the determining means counts how many combinations of the predetermined number of PID items can regenerate the secret information, identifies the copy generation number of the digital data on the basis of the counted number of combinations, and judges whether the recording of the digital data of the identified generation is permitted or not by comparison with a predetermined standard generation number.

14. Data recording apparatus according to claim 13, further comprising:
means for error correction encoding the input digital data before the PID items are embedded into the digital data.

15. Data recording apparatus arranged to record digital data in a recording medium, comprising:
means for generating a plurality of partial identification data ("PID") items from a piece of secret information, a predetermined minimum number of the items being required for regenerating the secret information;
means for recording the digital data together with the PID items in the recording medium.

16. Data recording apparatus according to claim 15, wherein:
the recording means superimposes the plurality of PID items on mutually different locations in the digital data and also stores information specifying the superimposed locations in the recording medium.

17. A data recording made by a process comprising the steps of:
generating a plurality of partial identification data ("PID") items from a piece of secret information, a predetermined minimum number of the items being required for regenerating the secret information;
recording the digital data onto a recording medium;
superimposing the plurality of PID items on mutually different locations in the digital data; and also storing information specifying the superimposed locations in the recording medium.

## Patentansprüche

1. Verfahren zum Kontrollieren von Kopiegenerationen digitaler Daten, mit folgenden Schritten:
Erzeugen mehrerer Teilidentifikationsdaten- ("PID"-) Elementen aus einer geheimen Information, wobei eine vorbestimmte Mindestanzahl dieser Elemente zum Neuerstellen der geheimen Informationen erforderlich ist;
Speichern der Daten zusammen mit den mehreren PID-Elementen in einem ersten Aufzeichnungsmedium;
Kopieren der Daten von dem ersten Aufzeichnungsmedium;
Verändern einer vorbestimmten Anzahl der PID-Elemente;
Speichern der kopierten Daten zusammen mit den teilweise veränderten Identifikationsdaten in einem zweiten Aufzeichnungsmedium; und
Bestimmen, ob die teilweise veränderten Identifikationsdaten zum Neuerstellen der geheimen Informationen verwendet werden können oder nicht, um die Zulässigkeit der Verwendung der kopierten Daten festzustellen.

2. Verfahren nach Anspruch 1, bei dem der Bestimmungsschritt folgende Schritte umfasst:
Identifizieren der Kopiegeneration der kopierten Daten anhand der Anzahl von unveränderten Identifikationsdatenelementen; und
Beurteilen, ob die Verwendung der kopierten Daten der identifizierten Generation zulässig ist oder nicht, und zwar durch Vergleich mit einer vorbestimmten Standardanzahl von Generationen.

3. Verfahren nach Anspruch 2, bei dem der Bestimmungsschritt folgende Schritte umfasst:
Zählen, wie viele Kombinationen der vorbestimmten Anzahl von unveränderten Identifikationsdatenelementen die geheimen Informationen neu erstellen können;
Identifizieren der Kopiegeneration der kopierten Daten anhand der gezählten Anzahl von Kombinationen; und
Beurteilen, ob die Verwendung der kopierten Daten der identifizierten Generation zulässig ist oder nicht, und zwar durch Vergleich mit einer vorbestimmten Standardanzahl von Generationen.

4. Verfahren nach Anspruch 1, bei dem der Datenspeicherschritt folgende Schritte umfasst:
Überlagern der mehreren PID-Elemente an voneinander unterschiedlichen Stellen in den Daten; und
Speichern der die überlagerten Stellen in den Daten spezifizierenden Informationen in dem ersten Aufzeichnungsmedium, wobei das Verfahren ferner folgende Schritte umfasst:
vor dem Kopieren Extrahieren der mehreren überlagerten Identifikationsdatenelemente aus den Daten unter Verwendung der die überlagerten Stellen spezifizierenden Informationen;
Überlagern der teilweise veränderten Identifikationsdatenelemente an voneinander unterschiedlichen Stellen in den kopierten Daten; und
Speichern von die überlagerten Stellen spezifizierenden Informationen zusammen mit den kopierten Daten in dem zweiten Aufzeichnungsmedium.

5. Verfahren nach Anspruch 4, ferner mit folgenden Schritten:
Fehlerkorrekturkodieren der Daten vor dem Speichern der Daten; und
Fehlerkorrekturdekodieren der Daten nach dem Extrahieren der Daten.

6. Datenwiedergabevorrichtung zum Wiedergeben von in einem Aufzeichnungsmedium gespeicherten digitalen Daten, wobei die Daten mehrere Teilidentifikationsdaten- ("PID"-) Elemente aufweisen, die aus einer geheimen Information erzeugt worden sind und von denen eine vorbestimmte Mindestanzahl zum Neuerstellen der geheimen Informationen erforderlich ist, wobei die Elemente an voneinander unterschiedlichen Stellen in den digitalen Daten eingebettet sind und die Stellen der Elemente spezifizierende Informationen ebenfalls in dem Aufzeichnungsmedium gespeichert sind, wobei die Vorrichtung aufweist:
eine Einrichtung zum Lesen der digitalen Daten und der mehreren PID-Elemente von dem Aufzeichnungsmedium;
eine Einrichtung zum Extrahieren der mehreren PID-Elemente aus den digitalen Daten unter Verwendung der Stelleninformationen; und
eine Einrichtung zum Feststellen der Zulässigkeit der Wiedergabe der digitalen Daten in Abhängigkeit davon, ob die mehreren eingebetteten PID-Elemente die geheimen Informationen neu erstellen können oder nicht.

7. Datenwiedergabevorrichtung nach Anspruch 6, bei der:
die Feststelleinrichtung eine Kopiegeneration der digitalen Daten anhand der Anzahl von unveränderten PID-Elementen identifiziert und durch Vergleich mit einer vorbestimmten Standardanzahl von Generationen beurteilt, ob das Wiedergeben der digitalen Daten der identifizierten Generation zulässig ist oder nicht.

8. Datenwiedergabevorrichtung nach Anspruch 7, bei der:
die Beurteilungseinrichtung zum Zählen dazu vorgesehen ist, wie viele Kombinationen der vorbestimmten Anzahl von PID-Elementen die geheimen Informationen neu erstellen können, die Kopiegeneration der digitalen Daten anhand der gezählten Anzahl der Kombinationen identiflziert und durch Vergleich mit einer vorbestimmten Standardanzahl von Generationen beurteilt, ob das Wiedergeben der digitalen Daten der identifizierten Generation zulässig ist oder nicht.

9. Datenwiedergabevorrichtung nach Anspruch 8, bei der:
die digitalen Daten fehlerkorrekturkodiert werden, bevor die PID-Elemente darin eingebettet werden, ferner mit:
einer Einrichtung zum Fehlerkorrekturdekodieren der digitalen Daten zum Wiedergeben der digitalen Daten nach dem Extrahieren der PID-Elemente.

10. Datenwiedergabevorrichtung nach Anspruch 6, ferner mit:
einer Einrichtung zum Verändern einer vorbestimmten Anzahl der PID-Elemente zu Aufzeichnungszwecken.

11. Datenaufzeichnungsvorrichtung zum Aufzeichnen digitaler Daten, die zusammen mit mehreren Teilidentifikationsdaten- ("PID"-) Elementen in ein Aufzeichnungsmedium eingegeben worden sind, wobei die PID-Elemente aus einer geheimen Information erzeugt worden sind und eine vorbestimmte Mindestanzahl der Elemente zum Neuerstellen der geheimen Informationen erforderlich ist, wobei die Datenaufzeichnungsvorrichtung aufweist:
einer Einrichtung zum Feststellen der Zulässigkeit des Aufzeichnens der digitalen Daten basierend darauf, ob die eingegebenen PID-Elemente die geheimen Informationen neu erstellen können oder nicht; und
einer Einrichtung zum Aufzeichnen der eingegebenen Daten zusammen mit den eingegebenen PID-Elementen auf das Aufzeichnungsmedium, wenn die Feststelleinrichtung beurteilt, dass die Aufzeichnung zulässig ist.

12. Datenaufzeichnungsvorrichtung nach Anspruch 11, bei der:
die Aufzeichnungseinrichtung die mehreren PID-Elemente an voneinander unterschiedlichen Stellen in die eingegebenen digitalen Daten einbettet und ferner die Stellen der PID-Elemente spezifizierende Informationen aufzeichnet.

13. Datenaufzeichnungsvorrichtung nach Anspruch 11, bei der
die Feststelleinrichtung zählt, wie viele Kombinationen der vorbestimmten Anzahl von PID-Elementen die geheimen Informationen neu erstellen können, die Anzahl der Kopiegenerationen der digitalen Daten anhand der gezählten Anzahl von Kombinationen identifiziert und durch Vergleich mit einer vorbestimmten Standardanzahl von Generationen beurteilt, ob das Aufzeichnen der digitalen Daten der identifizierten Generation zulässig ist oder nicht.

14. Datenaufzeichnungsvorrichtung nach Anspruch 13, ferner mit:
einer Einrichtung zum Fehlerkorrekturkodieren der eingegebenen digitalen Daten, bevor die PID-Elemente in die digitalen Daten eingebettet werden.

15. Datenaufzeichnungsvorrichtung zum Aufzeichnen digitaler Daten auf ein Aufzeichnungsmedium, mit:
einer Einrichtung zum Erzeugen mehrerer Teilidentifikationsdaten-("PID"-) Elemente aus einer geheimen Information, wobei eine vorbestimmte Mindestanzahl der Elemente zum Neuerstellen der geheimen Informationen erforderlich ist;
einer Einrichtung zum Aufzeichnen der digitalen Daten zusammen mit den PID-Elementen auf das Aufzeichnungsmedium.

16. Datenaufzeichnungsvorrichtung nach Anspruch 15, bei der:
die Aufzeichnungseinrichtung die mehreren PID-Elemente an voneinander unterschiedlichen Stellen in den digitalen Daten überlagert und ferner die überlagerten Stellen spezifizierende Informationen in dem Aufzeichnungsmedium speichert.

17. Datenaufzeichnung durch Anwendung eines Verfahrens mit folgenden Schritten:
Erzeugen mehrerer Teilidentifikationsdaten- ("PID"-) Elementen aus einer geheimen Information, wobei eine vorbestimmte Mindestanzahl der Elemente zum Neuerstellen der geheimen Informationen erforderlich ist;
Aufzeichnen der digitalen Daten auf einem Aufzeichnungsmedium;
Überlagern der mehreren PID-Elemente an voneinander unterschiedlichen Stellen in den digitalen Daten; und ferner Speichern von die überlagerten Stellen spezifizierenden Informationen in dem Aufzeichnungsmedium.

## Revendications

1. Procédé de contrôle de génération de copies de données numériques, comprenant :
la génération d'une pluralité d'éléments de données d'identification partielles à partir d'une partie d'informations secrètes, un nombre minimum prédéterminé de ces éléments étant nécessaire pour régénérer les informations secrètes ;
la mémorisation des données sur un premier support d'enregistrement avec la pluralité d'éléments de données d'identification partielles ;
la copie des données à partir du premier support d'enregistrement ;
la modification d'un nombre prédéterminé d'éléments de données d'identification partielles ;
la mémorisation des données copiées sur un deuxième support d'enregistrement avec les données d'identification partiellement modifiées ; et
la détermination du fait que les données d'identification partiellement modifiées peuvent ou non être utilisées pour régénérer les informations secrètes, de manière à déterminer la permission d'utiliser les données copiées.

2. Procédé selon la revendication 1, dans lequel la détermination comprend :
l'identification de la génération de copie des données copiées sur la base du nombre d'éléments de données d'identification non modifiés ; et
le jugement si l'utilisation des données copiées de la génération identifiée est autorisée ou non par comparaison avec un nombre de générations standard prédéterminé.

3. Procédé selon la revendication 2, dans lequel la détermination comprend :
le comptage du nombre de combinaisons du nombre prédéterminé d'éléments de données d'identification non modifiés qui sont capables de régénérer les informations secrètes ;
l'identification de la génération de copie des données copiées sur la base du nombre compté de combinaisons ; et
le jugement si l'utilisation des données copiées de la génération identifiée est autorisée ou non par comparaison avec un nombre de générations standard prédéterminé.

4. Procédé selon la revendication 1, dans lequel l'étape de mémorisation de données comprend :
la superposition de la pluralité d'éléments de données d'identification partielles à des emplacements mutuellement différents dans les données ; et
la mémorisation d'informations spécifiant les emplacements de superposition avec les données sur le premier support d'enregistrement ; le procédé comprenant en outre les étapes consistant à :
extraire avant la copie la pluralité d'éléments de données d'identification superposés des données en utilisant les informations spécifiant les emplacements de superposition ;
superposer les éléments de données d'identification partiellement modifiés à des emplacements mutuellement différents des données copiées ; et
mémoriser des informations spécifiant les emplacements de superposition avec les données copiées sur le deuxième support d'enregistrement.

5. Procédé selon la revendication 4, comprenant en outre :
le codage à correction d'erreur des données avant la mémorisation des données ; et
le décodage à correction d'erreur des données après l'extraction des données.

6. Appareil de reproduction de données qui est agencé de manière à reproduire des données numériques mémorisées sur un support d'enregistrement, les données comprenant une pluralité d'éléments de données d'identification partielles qui sont générés à partir d'une partie d'informations secrètes et dont un nombre minimum prédéterminé est nécessaire pour régénérer les informations secrètes, les éléments étant logés dans les données numériques à des emplacements mutuellement différents et les informations spécifiant les emplacements des éléments étant également mémorisées sur le support d'enregistrement, l'appareil comprenant :
des moyens pour lire les données numériques et la pluralité d'éléments de données d'identification partielles sur le support d'enregistrement ;
des moyens pour extraire la pluralité d'éléments de données d'identification partielles des données numériques en utilisant les informations d'emplacement ; et
des moyens pour déterminer la permission de reproduire les données numériques en fonction du fait que la pluralité d'éléments de données d'identification partielles logés peut ou non régénérer les informations secrètes.

7. Dispositif de reproduction de données, selon la revendication 6, dans lequel :
les moyens de détermination identifient une génération de copie des données numériques sur la base du nombre d'éléments de données d'identification partielles non modifiés et jugent si la reproduction des données numériques de la génération identifiée est autorisée ou non par comparaison avec un nombre de générations standard prédéterminé.

8. Dispositif de reproduction de données selon la revendication 7, dans lequel :
les moyens de jugement sont adaptés pour compter combien de combinaisons du nombre prédéterminé d'éléments de données d'identification partielles peuvent régénérer les informations secrètes, identifient la génération de copie des données numériques sur la base du nombre compté des combinaisons et jugent si la reproduction des données numériques de la génération identifiée est autorisée ou non par comparaison avec un nombre de générations standard prédéterminé.

9. Dispositif de reproduction de données selon la revendication 8, dans lequel :
les données numériques sont codées avec correction d'erreur avant que les éléments de données d'identification partielles soient logés dans celles-ci, et comprenant en outre :
des moyens pour décoder avec correction d'erreur les données numériques pour reproduire les données numériques après l'extraction des éléments de données d'identification partielles.

10. Dispositif de reproduction de données selon la revendication 6, comprenant en outre :
des moyens pour modifier un nombre prédéterminé des éléments de données d'identification partielles pour enregistrement.

11. Dispositif d'enregistrement de données agencé de manière à enregistrer des données numériques qui sont entrées avec une pluralité d'éléments de données d'identification partielles sur un support d'enregistrement, les éléments de données d'identification partielles étant générés à partir d'une partie d'informations secrètes et un nombre minimum prédéterminé des éléments étant nécessaire pour régénérer les informations secrètes, comprenant :
des moyens pour déterminer la permission d'enregistrer les données numériques en fonction du fait que les éléments de données d'identification partielles d'entrée peuvent ou non régénérer les informations secrètes ; et
des moyens pour enregistrer les données numériques d'entrée avec les éléments de données d'identification partielles d'entrée sur le support d'enregistrement lorsque les moyens de détermination jugent que l'enregistrement est autorisé.

12. Dispositif de données selon la revendication 11, dans lequel :
les moyens d'enregistrement logent la pluralité d'éléments de données d'identification partielles à des emplacements mutuellement différents dans les données numériques d'entrée et enregistrent également des informations spécifiant les emplacements des éléments de données d'identification partielles.

13. Dispositif d'équipement d'enregistrement de données selon la revendication 11, dans lequel :
les moyens de détermination comptent combien de combinaisons du nombre prédéterminé d'éléments de données d'identification partielles peuvent régénérer les informations secrètes, identifient le nombre de générations de copie des données numériques sur la base du nombre compté de combinaisons et jugent si l'enregistrement des données numériques de la génération identifiée est autorisé ou non par comparaison avec un nombre de générations standard prédéterminé.

14. Dispositif d'enregistrement de données selon la revendication 13, comprenant en outre :
des moyens pour coder avec correction d'erreur les données numériques d'entrée avant que les éléments de données d'identification partielles soient logés dans les données numériques.

15. Dispositif d'enregistrement de données agencé de manière à enregistrer des données numériques sur un support d'enregistrement, comprenant :
des moyens pour générer une pluralité d'éléments de données d'identification partielles à partir d'une partie d'informations secrètes, un nombre minimum prédéterminé des éléments étant nécessaire pour régénérer les informations secrètes ;
des moyens pour enregistrer les données numériques avec les éléments de données d'identification partielles sur le support d'enregistrement.

16. Dispositif d'enregistrement de données selon la revendication 15, dans lequel :
les moyens d'enregistrement superposent la pluralité d'éléments de données d'identification partielles à des emplacements mutuellement différents dans les données numériques et mémorisent également des informations spécifiant les emplacements de superposition sur le support d'enregistrement.

17. Enregistrement de données réalisé par un procédé comprenant les étapes consistant à :
générer une pluralité d'éléments de données d'identification partielles à partir d'une partie d'informations secrètes, un nombre minimum prédéterminé des éléments étant nécessaire pour régénérer les informations secrètes ;
enregistrer les données numériques sur un support d'enregistrement ;
superposer la pluralité d'éléments de données d'identification partielles à des emplacements mutuellement différents dans les données numériques ; et mémoriser également des informations spécifiant les emplacements de superposition sur le support d'enregistrement.
